# EUROPÄISCHE PATENTSCHRIFT

(11) **EP 0 764 103 B1**
(45) Veröffentlichungstag und Bekanntmachung des Hinweises auf die Patenterteilung: **29.09.1999**
(21) Anmeldenummer: 96909125.5
(22) Anmeldetag: 26.03.1996
(51) Int. Cl.: B61D 17/20, B61D 3/10, B62D 47/02

(54) **VORRICHTUNG ZUR VERBINDUNG VON SCHIENENFAHRZEUGEN**
DEVICE FOR COUPLING RAIL VEHICLES
DISPOSITIF PERMETTANT D'ACCOUPLER DES VEHICULES SUR RAILS

(30) Priorität: 05.04.1995 DE 19512630
(43) Veröffentlichungstag der Anmeldung: 26.03.1997
(73) Patentinhaber: ABB Daimler-Benz Transportation (Technology) GmbH, 13627 Berlin (DE)
(72) Erfinder: LOHMANN, Alfred, D-57080 Siegen (DE); BIEKER, Guido, D-57399 Kirchhundem (DE); SCHWAB, Wolfram, D-13437 Berlin (DE); ROTHER, Eva, D-57078 Siegen (DE); BÖHME, Christian, D-10555 Berlin (DE)
(74) Vertreter: Luderschmidt, Schüler & Partner GbR
(86) Internationale Anmeldenummer: EP9601313
(87) Internationale Veröffentlichungsnummer: WO9631383

(56) Entgegenhaltungen:
- EP-A- 0 032 079
- FR-A- 2 655 602

## Beschreibung

Die Erfindung betrifft eine Vorrichtung zur Verbindung von Schienenfahrzeugen entsprechend dem Oberbegriff des Anspruchs 1, welche aus mehreren miteinander verbundenen Wagenteilen gebildet sind, mit einem einen Drehkranz aufweisenden Drehgelenk.

Aus der EP 0 340 760 B1 ist eine derartige Vorrichtung für ein mehrgliedriges Schienenfahrzeug bekannt, wobei die miteinander verbundenen Wagenteile jeweils eine gemeinsame Gelenkverbindung aufweisen. Die bekannte Vorrichtung ist für Schienenfahrzeuge mit besonders niedrigem Wagenboden vorgesehen, so daß nur wenig Raum für ein solches Drehgelenk zur Verfügung steht. Die bekannte Vorrichtung ist daher als geschlossener Drehkranz ausgebildet, der mit je einem Innenring und einem Außenring versehen, biege- und verwindungssteif mit dem einen Wagenteil und über ein Gelenk mit horizontaler Drehachse mit dem anderen Wagenteil verbunden ist.

Im Betrieb zeigt sich bei Schienenfahrzeugen ganz allgemein und bei dem bekannten mehrgliedrigen Fahrzeug im besonderen, daß die einzelnen Wagenteile beim Durchfahren von Gleisen zu Schwingungen angeregt werden, was zwangsläufig zu ungewollten Bewegungen des Fahrzeuges führt. Besonders die Bewegung um die Hochachse, auch Schlingern genannt, wirkt sich sehr nachteilig auf das Laufverhalten des Fahrzeuges aus.

Ausgehend von diesem Stand der Technik liegt der Erfindung die Aufgabe zugrunde, eine Vorrichtung der eingangs genannten Art zu schaffen, die das Schlingern von miteinander verbundenen Wagenteilen verhindert. Dabei sollen die Laufeigenschaften des Fahrzeuges bei der Bogendurchfahrt nicht beeinträchtigt werden. Darüber hinaus soll die Vorrichtung unabhängig vom Reißverschluß wirken.

Diese Aufgabe wird erfindungsgemäß durch die Merkmale des kennzeichnenden Teils des Patentanspruchs 1 gelöst. Dementsprechend ist im Gelenkbereich zwischen je zwei Wagenteilen eine Vorrichtung zur Drehhemmung vorgesehen, die von im wesentlichen zwei am Umfang des Drehkranzes des Drehgelenkes angeordneten Gleitkörpern gebildet ist, die reibschlüssig miteinander zusammenarbeiten und jeweils an einem der beiden im Drehgelenk verbundenen Wagenteile befestigt sind. Um die Kontaktkraft zwischen den Gleitkörpern zu verstärken, sind Druckfedern vorgesehen.

Bei einer möglichen Auslenkung eines Wagenteiles, nämlich bei einer Drehbewegung um den Gelenkdrehpunkt, ist es vorteilhaft, daß einer möglichen Dreh- oder Schwenkbewegung eines Wagenteiles ständig ein Gegenmoment, unabhängig von Größe und Geschwindigkeit der Drehbewegung, sofort entgegenwirkt.

Vorteilhafterweise ist gemäß einer bevorzugten Ausgestaltung der Erfindung die Vorrichtung zumindest bereichsweise am Umfang des Drehkranzes angeordnet, wobei sich die Gleitkörper konzentrisch zum Drehkranz außen an diesen anschließen.

Eine bevorzugte Ausführungsform der Erfindung sieht vor, daß die Gleitkörper von einer Gleitplatte einerseits und wenigstens einem Reibbelag andererseits gebildet sind. Dabei ist die Gleitplatte fest mit dem einen Wagenteil verbunden, während der Reibbelag mit dem anderen Wagenteil verbunden ist.

Entsprechend einer zweckmäßigen Weiterbildung dieser Ausführungsform ist der Reibbelag in mehrere Einzelbeläge aufgeteilt, die in sogenannten Belaghaltern geführt und gehalten sind.

Nach einer vorteilhaften Ausführungsform der Erfindung beaufschlagen die Druckfedern die Reibbeläge gegen die Gleitplatte, wodurch die Kontaktkraft zwischen der Gleitplatte einerseits und dem Reibbelag andererseits verstärkt und die angestrebte Drehhemmung vergrößert werden kann. Hierbei greifen die Federn in sogenannte Federtaschen ein, die an dem zugehörigen Wagenteil radial zum Gelenkdrehpunkt angeordnet sind und eine als Druckplatte bezeichnete Unterlage des Reibbelages senkrecht beaufschlagen. Die Druckplatte dient hierbei dazu, die aus der von den Federn aufgebrachten Vorspannung herrührende Anpreßkraft möglichst gleichmäßig auf die Kontaktfläche zwischen dem Reibbelag und der Gleitplatte am anderen Wagenteil zu übertragen.

Zur Kompensation einer verschleißbedingten Abnahme der Dicke der Reibbeläge und, damit einhergehend, einer Abnahme der Anpreßkraft können Paßscheiben vorgesehen sein, die zum Ausgleich zwischen die Federn und die zum Vorspannen der Federn dienenden Spannelemente, vorzugsweise Schraubenbolzen, eingefügt werden.

In weiterer Verbesserung der Erfindung kann ferner ein sogenanntes Segmentblech vorgesehen sein, welches zwischen der Druckplatte und dem Belaghalter eingefügt ist und dazu dient, sich elastisch dem Verlust an Dicke des Reibbelages infolge Verschleiß anzupassen, so daß auch hierdurch ein optimaler Anpreßdruck auf den Reibbelag aufgebracht wird.

Durch die Vorrichtung zur Drehhemmung erfolgt eine reibkraftschlüssige Verbindung der Wagenteile, die unabhängig vom Reibverschleiß wirkt. Dadurch kann die Schlingerbewegung der einzelnen Wagenkästen verhindert und eine Stabilisierung der gesamten Fahrzeugbewegung erreicht werden. Das durch die erfindungsgemäße Vorrichtung zur Drehhemmung erzeugte Reibmoment ist lediglich vom Reibwert der verwendeten Werkstoff-Paarung sowie von der wirkenden Anpreßkraft zwischen dem Reibbelag einerseits und der Gleitplatte andererseits abhängig. Lediglich bei Bogenfahrten wird es durch die Größe der Relativbewegung der im Drehgelenk miteinander verbundenen Wagenteile überwunden.

Diese und andere vorteilhafte Ausgestaltungen und Verbesserungen der Erfindung sind Gegenstand der Unteransprüche.

Um Schlingerbewegungen und sonstige Beeinträchtigungen des Laufverhaltens zu verhindern, ist aus der EP 0 009 726 B1 eine als Drehhemmung bezeichnete Vorrichtung bekanntgeworden, die dazu dient, ohne Nachteil für die Kurvenfahrt, das heißt mit der Möglichkeit der erforderlichen Ausdrehung im Gleisbogen, einen ruhigen Geradeauslauf zu gewährleisten.

Allerdings ist die aus der EP 0 009 726 B1 bekannte Vorrichtung zur Drehhemmung nur für Schienenfahrzeuge mit Einzel- und Doppellaufwerken vorgesehen, die eine Aufhängung für Blatttragfedern aufweisen, an welcher die Vorrichtung angreift. Eine Anordnung in einem Gelenk der eingangs erwähnten Art ist weder vorgesehen noch möglich.

Die EP-A-0 032 079 beschreibt eine Vorrichtung zum Verbinden von Busfahrzeugen mit einem Gelenk, das zwischen einem Hauptwagen und einem Anhänger angeordnet ist. Im Bereich des Gelenks sind Gleitkörper vorgesehen, die im Abstand zueinander angeordnet sind. Durch Anlegen eines hydraulischen Drucks können die Gleitkörper im Bedarfsfall reibschlüsig aneinander gedrückt werden, so daß eine Drehhemmung im Gelenk bewirkt wird.

Anhand eines in der schematischen Zeichnung dargestellten Ausführungsbeispieles sollen die Erfindung, ihre Wirkungsweise, vorteilhafte Ausgestaltungen und Verbesserungen sowie besondere Vorteile näher erläutert und beschrieben werden.

Es zeigen:
- Fig. 1: zwei miteinander verbundene Wagenteile in schematischer Darstellung in Draufsicht,
- Fig. 2: eine Vorrichtung zur Drehhemmung im Längsschnitt,
- Fig. 3: einen Teil eines Drehgelenks im Teilschnitt in Ansicht von unten.

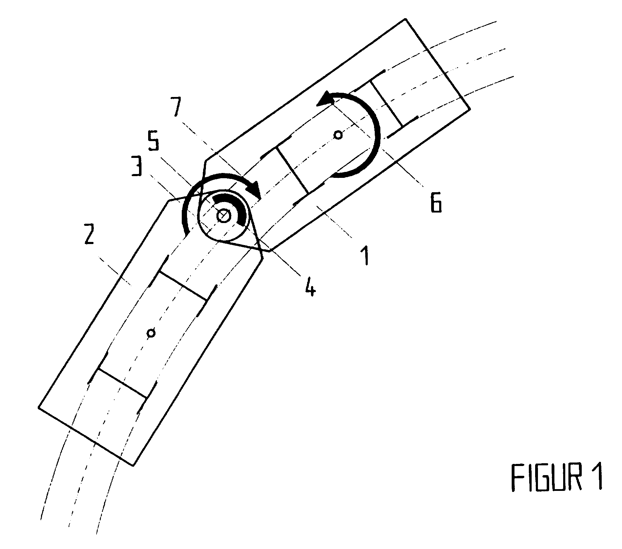

In Fig. 1 ist in schematischer Darstellung eine Anordnung von zwei Wagenteilen 1, 2 in Draufsicht gezeigt, die mittels eines Drehgelenks 3 um einen Drehpunkt 5 schwenkbar miteinander verbunden sind. Am Drehgelenk 3 ist schematisch eine Vorrichtung zur Drehhemmung 4 gemäß der Erfindung als halbkreisförmiger breiter Linienzug dargestellt. Diese Darstellung läßt erkennen, daß die erfindungsgemäße Vorrichtung zur Drehhemmung 4 konzentrisch zum nicht näher gezeigten Drehkranz des Drehgelenks 3 mit dem Drehpunkt 5 angeordnet ist, wobei die Vorrichtung zur Drehhemmung 4 gemäß der Erfindung hier im gezeigten Beispiel nur einen Bereich von etwa 120° abdeckt.

Des weiteren ist mit dem halbkreisförmigen Pfeil 6 eine Drehbewegung des Wagenteils 1 um dessen Hochachse angezeigt, die zu Instabilitäten des Geradeauslaufs führt und allgemein als Schlingern bezeichnet wird. Ein weiterer halbkreisförmiger Pfeil 7 bezeichnet das zur Kompensation des Schlingerns 6 erfindungsgemäß vorgesehene Gegenmoment, das stabilisierend wirkt und der Drehbewegung 6 unabhängig von deren Größe und Geschwindigkeit entgegenwirkt.

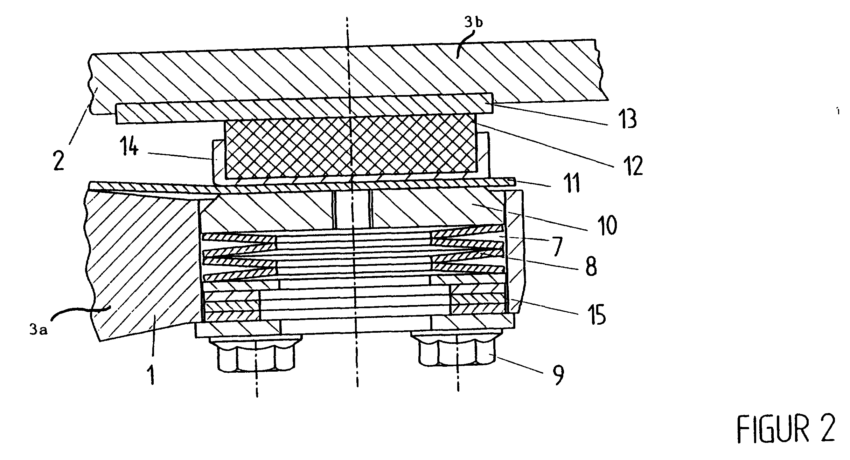

In Fig. 2 ist ein schematischer Längsschnitt durch eine erfindungsgemäße Vorrichtung 4 zur Drehhemmung gezeigt mit einem ersten Wagenteil 1 und einem zweiten Wagenteil 2. Das erste Wagenteil 1 ist über ein Drehgelenk 3 mit dem zweiten Wagenteil 2 gelenkig gekoppelt, wobei in Fig. 2 insbesondere die radial im Abstand zum hier nur angedeuteten Drehpunkt 5 des Drehgelenks 3 angeordnete Drehhemmungsvorrichtung 4 dargestellt ist mit ihren Einzelheiten, wie die Gelenkteile 3a, 3b, die Federtaschen 7, die Druckfeder 8, welche hier als Tellerfederpaket ausgebildet ist, sowie Spannschrauben 9 und eine Druckplatte 10. Ferner gehören zu der erfindungsgemäßen Drehhemmungsvorrichtung 4 ein Segmentblech 11, auf welchem ein Belaghalter 14 mit dem darin eingesetzten Reibbelag 12 abgestützt ist, und eine Gleitplatte 13, die mit dem zweiten Wagenteil 2 verbunden ist und als Anlagefläche für den Reibbelag 12 dient. Zur Einstellung der gewünschten Vorspannkraft der Druckfeder 8 dienen Paßscheiben 15, die je nach Bedarf zwischen die Elemente der Druckfeder 8 und der Spannschraube 9 eingefügt werden.

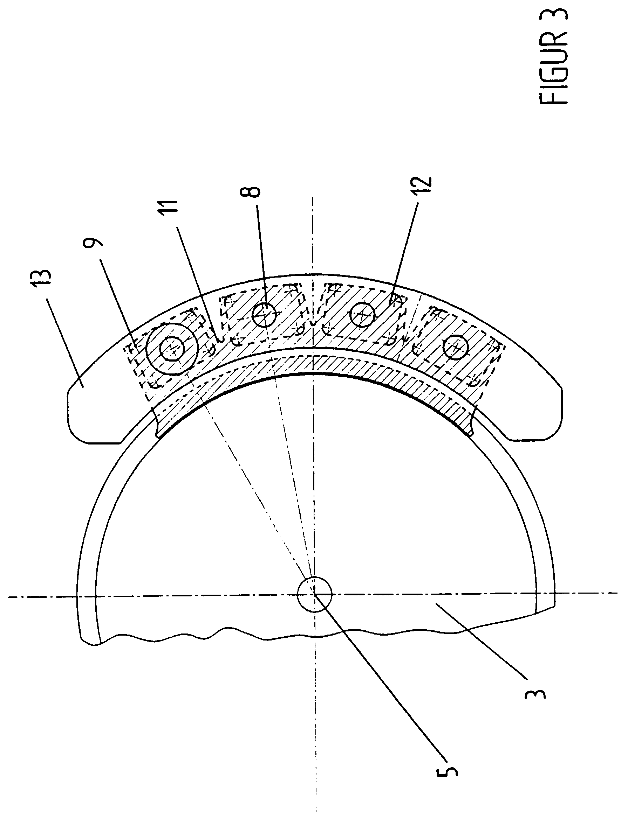

In Fig. 3 schließlich ist eine teilweise Unteransicht auf das Drehgelenk 3 wiedergegeben, wobei die erfindungsgemäße Drehhemmungsvorrichtung 4 im Teilschnitt gezeigt ist. Hieraus ist erkennbar, daß mehrere Druckfedern 8 vorgesehen sind, die jeweils in ein Reibbelagelement 12 eingreifen, die ihrerseits an der Gleitplatte 13 anliegen. Ferner ist das Segmentblech 11 in seiner Kontur mit den Einschnitten erkennbar.

Zum Zusammenwirken der aus den Figuren entnehmbaren Einzelheiten und zur Wirkungsweise der erfindungsgemäßen Vorrichtung zur Drehhemmung 4 ist folgendes hervorzuheben. Am Wagenteil 1 sind radial zum Gelenkdrehpunkt 5, des Gelenkteiles 3 a Federtaschen für den senkrechten Einbau von Federn 8 vorgesehen. Jede dieser Federn wird mit Schrauben 9 am Gelenkteil 3 a des Wagenteiles 1 in diesen Federtaschen 7 befestigt. Die Federn wirken senkrecht auf Druckplatten 10.

Das radial zum Gelenkdrehpunkt 5 ausgerichtete, geschlitzte Segmentblech 11, das ebenfalls am Gelenkteil 3 a des Wagenteil 1 befestigt ist, liegt an den Druckplatten 10 an. Auf dem Segmentblech 11 befindlich sind in Belaghalter 14 Reibbeläge 12 befestigt. Die Reibbeläge 12 liegen unter einer Gleitplatte 13 an, die fest an dem Gelenkteil 3 b des Wagenteiles 2 befestigt ist, wobei das Gelenkteil 3 b ebenfalls fest an dem Wagenteil 2 angeordnet ist und die Gelenkteile 3 a und 3 b des Gelenkes 3 in ihrem vertikalen Abstand gegeneinander fixiert sind. Da die Druckplatten 10 und das Segmentblech 11 nicht miteinander verbunden sind, ist ein stetiges, ebenes Anpressen der Reibbeläge 12 an der Gleitplatte 13 gewährleistet.

Das geschlitzte Segmentblech 11 kann sich elastisch dem Reibbelagverschleiß anpassen. Durch Gewährleistung der Spielfreiheit zwischen den Reibbelägen 12 und der Gleitplatte 13, erreicht man bei der geringsten Drehbewegung zwischen Belägen und Gleitplatte sofort den Maximalwert des realisierbaren Reibmomentes. Die am Gelenkteil 3 b des Wagenteiles 2 befestigte Gleitplatte 13 überstreicht bei einer Drehbewegung der Wagenteile 1, 2 die Reibbeläge 12, die durch die Federkräfte über Druckplatten 10 und Segmentblech 11 an die Gleitplatte 13 gepreßt werden.

Das entstehende Reibmoment ist bei der Montage durch eine variable Federvorspannung einstellbar. Dazu werden die Federn 8 mit Paßscheiben 15 unterlegt. Das Einbringen der Paßscheiben erfolgt weiterhin zur Kompensation der durch die Abnutzung der Reibbeläge veränderten Federkraft.

## Patentansprüche

1. Vorrichtung zur Verbindung von Schienenfahrzeugen, welche aus mehreren miteinander mit einem einen Drehkranz aufweisenden Drehgelenk (3) verbundenen ersten und zweiten Wagenteilen (1, 2) gebildet sind, wobei im Bereich des Drehgelenks (3) zwischen je zwei Wagenteilen (1, 2) eine Vorrichtung (4) zur Drehhemmung vorgesehen ist, die von zumindest zwei am Umfang des Drehkranzes des Drehgelenks (3) angeordneten Gleitkörpern (12, 13) gebildet ist,
dadurch gekennzeichnet, daß
wenigstens eine Druckfeder vorgesehen ist, so daß die Gleitkörper (12, 13) spielfrei und unter Vorspannung aneinander liegen sowie reibschlüssig miteinander zusammenarbeiten, wobei die Gleitkörper (12, 13) jeweils an einem der beiden im Drehgelenk (3) verbundenen Wagenteile (1, 2) befestigbar sind.

2. Vorrichtung nach Anspruch 1, dadurch gekennzeichnet, daß die Vorrichtung (4) zur Drehhemmung zumindest bereichsweise am Umfang des Drehkranzes angeordnet ist, und daß sich die Gleitkörper (12, 13) konzentrisch zum Drehkranz an diesen anschließen.

3. Vorrichtung nach Anspruch 1 oder 2, dadurch gekennzeichnet, daß die Gleitkörper (12, 13) aus einer Gleitplatte (13) einerseits und wenigstens einem Reibbelag (12) andererseits gebildet sind.

4. Vorrichtung nach Anspruch 3, dadurch gekennzeichnet, daß die Gleitplatte (13) fest mit dem einen Wagenteil (2) verbunden ist, während der Reibbelag (12) mit dem anderen Wagenteil (1) verbunden ist.

5. Vorrichtung nach Anspruch 3 oder 4, dadurch gekennzeichnet, daß der Reibbelag in mehrere Einzelbeläge aufgeteilt ist, die in sogenannten Belaghaltern (14) geführt und gehalten sind.

6. Vorrichtung nach einem der Ansprüche 3 bis 5, dadurch gekennzeichnet, daß die wenigstens eine Druckfeder (8) die Kontaktkraft zwischen der Gleitplatte (13) einerseits und dem Reibbelag (12) andererseits verstärkt.

7. Vorrichtung nach einem der Ansprüche 3 bis 6, dadurch gekennzeichnet, daß die wenigstens eine Druckfeder (8) den Reibbelag (12) gegen die Gleitplatte (13) beaufschlagt und hierdurch die angestrebte Drehhemmung vergrößert.

8. Vorrichtung nach einem der Ansprüche 3 bis 7, dadurch gekennzeichnet, daß an dem zugehörigen Wagenteil (1) radial zu einem Gelenkdrehpunkt (5) sogenannte Federtaschen (7) angeordnet sind, in welche die Druckfedern (8) eingreifen und eine als Druckplatte (10) bezeichnete Unterlage des Reibbelags (12) senkrecht beaufschlagen.

9. Vorrichtung nach Anspruch 8, dadurch gekennzeichnet, daß die Druckplatte (10) dazu dient, die aus der von den Druckfedern (8) aufgebrachten Vorspannung herrührende Anpreßkraft möglichst gleichmäßig auf die Kontaktfläche zwischen dem Reibbelag (12) und der Gleitplatte (13) am anderen Wagenteil (2) zu übertragen.

10. Vorrichtung nach einem der Ansprüche 3 bis 9, dadurch gekennzeichnet, daß zur Kompensation einer verschleißbedingten Abnahme der Dicke der Reibbeläge (12) und, damit einhergehend, einer Abnahme der Anpreßkraft Paßscheiben (15) vorgesehen sind, die zum Ausgleich zwischen die Druckfedern (8) und die zum Vorspannen der Druckfedern (8) dienenden Spannelemente (9), vorzugsweise Schraubenbolzen, eingefügt werden.

11. Vorrichtung nach einen der Ansprüche 8 bis 10, dadurch gekennzeichnet, daß ein Segmentblech (11) zwischen der Druckplatte (10) und dem Belaghalter (14) eingefügt ist.

12. Vorrichtung nach Anspruch 11, dadurch gekennzeichnet, daß das Segmentblech (11) dazu dient, sich elastisch dem Verlust an Dicke des Reibbelags (12) infolge Verschleiß anzupassen und daß so der Anpreßdruck auf den Reibbelag (12) optimal aufgebracht ist.

13. Vorrichtung nach einem der vorherigen Ansprüche, dadurch gekennzeichnet, daß die Vorrichtung (4) zur Drehhemmung eine vom Reibverschleiß unabhängige reibkraftschlüssige Verbindung der Wagenteil (1, 2) bildet, welche die Schlingerbewegung der einzelnen Wagenkästen (1, 2) verhindert und zu einer Stabilisierung der gesamten Fahrzeugbewegung führt.

14. Vorrichtung nach einem der Ansprüche 3 bis 13, dadurch gekennzeichnet, daß das durch die Vorrichtung (4) zur Drehhemmung erzeugte Reibmoment vom Reibwert der verwendeten Werkstoffpaarung sowie von der wirkenden Anpreßkraft zwischen dem Reibbelag (12) einerseits und der Gleitplatte (13) andererseits abhängig ist.

15. Vorrichtung nach einem der vorherigen Ansprüche, dadurch gekennzeichnet, daß nur bei Bogenfährten die Größe der Relativbewegung der im Drehgelenk miteinander verbundenen Wagenteile (1, 2) die Drehhemmung übersteigt.

## Claims

1. A device for connecting rail-mounted vehicles constituted by a plurality of first and second wagon parts (1, 2) connected to each other by a swivel joint (3) comprising a slewing ring whereby in the area of the swivel joint (3) and between every two wagon parts (1, 2) there is a device (4) for inhibiting rotation and formed by at least two sliding bodies (12, 13) disposed on the periphery of the slewing ring of the swivel joint (3), characterised in that at least one thrust spring is provided and in that the sliding bodies (12, 13) bear on each other frictionally in clearance-free and pretensioned fashion and co-operate with each other frictionally, each of the sliding bodies (12, 13) being capable of being fixed to one of the two wagon parts (1, 2) which are connected at the swivel joint (3).

2. A device according to claim 1, characterised in that the device (4) for inhibiting rotation has at least portions disposed on the periphery of the slewing ring and in that the sliding bodies (12, 13) are concentrically adjacent to the slewing ring.

3. A device according to claim 1 or 2, characterised in that the sliding bodies (12, 13) consist of a sliding plate (13) on the one hand and at least one friction lining (12) on the other

4. A device according to claim 3, characterised in that the sliding plate (13) is rigidly connected one wagon part (2) while the friction lining (12) is connected to the other wagon part (1).

5. A device according to claim 3 of 4, characterised in that the friction lining is subdivided into a plurality of individual linings which are guided and supported in what are referred to as lining holders (14).

6. A device according to one of claims 3 to 5, characterised in that the at least one thrust spring (8) increases the contact force between the sliding plate (13) on the one hand and the friction lining (12) on the other.

7. A device according to one of claims 3 to 6, characterised in that the at least one thrust spring (8) acts upon the friction lining (12) urging it towards the sliding plate (13) and so increases the desired inhibition of rotation.

8. A device according to one of claims 3 to 7, characterised in that there are disposed on the associated wagon part (1) and radially in relation to an articulation pivot point (5) so-called spring pockets (7) engaged by the thrust springs (8) and act at right-angles on a backing of the friction lining (12) which is referred to as the thrust plate (10).

9. A device according to claim 8, characterised in that the thrust plate (10) serves to transfer the applied pressure arising from the initial tension applied by the thrust springs (8) as evenly as possible to the contact surface between the friction lining (12) and the sliding plate (13) on the other wagon part (2).

10. A device according to one of clams 3 to 9, characterised in that to compensate for a wear-related reduction in the thickness of the friction linings (12) and a concomitant a reduction in the applied pressure, shims (15) are provided which, to achieve compensation, are inserted between the thrust springs (8) and the clamping elements (9), preferably screw bolts which serve to pretension the thrust springs (8).

11. A device according to one of claims 8 to 10, characterised in that a segmental disc (11) is inserted between the thrust plate (10) and the lining holder (14).

12. A device according to claim 11, characterised in that the segmental disc (11) serves elastically to adapt for the loss of thickness of the friction lining (12) due to wear and tear and in that in this way the pressure applied to the friction lining (12) is applied in optimum manner

13. A device according to one of the preceding claims characterised in that the device (4) for inhibiting rotation forms a frictional connection of the wagon parts (1, 2) which is independent of frictional wear and which prevents the snaking movement of individual wagon bodies (1, 2) an results in a stabilising of the entire vehicle movement

14. A device according to one of claims 3 to 13, characterised in that the friction moment generated by the device (4) for inhibiting rotation is dependent upon the coefficient of friction of the material pairing used and upon the applied pressure acting between the friction lining (12) on the one hand and the sliding place (13) on the other.

15. A device according to one of the preceding claims, characterised in that the degree of relative movement of the wagon parts (1, 2) connected to each other at the swivel joint only exceeds the inhibition of rotation when bends are being negotiated.

## Revendications

1. Dispositif destiné à l'assemblage de véhicules ferroviaires, qui sont formés par plusieurs premières et deuxièmes parties de wagon (1, 2) assemblées les unes aux autres par l'intermédiaire d'une articulation rotative (3) munie d'une couronne d'orientation, un dispositif (4) destiné à réprimer le mouvement de pivotement étant prévu dans la zone de l'articulation rotative (3) entre chacune des deux parties de wagon (1, 2), lequel dispositif est formé par au moins deux corps de frottement (12, 13) disposés sur la périphérie de la couronne d'orientation de l'articulation rotative (3), caractérisé en ce qu'il est prévu au moins un ressort de pression, de telle sorte que les corps de frottement (12, 13) soient disposés l'un contre l'autre sans jeu et sous l'effet d'une précontrainte, de même qu'ils agissent conjointement par frottement, les corps de frottement (12, 13) pouvant être fixés chacun contre l'une des deux parties de wagon (1, 2) assemblées par l'articulation rotative (3).

2. Dispositif selon la revendication 1, caractérisé en ce que le dispositif (4) destiné à réprimer le mouvement de pivotement est disposé au moins sur une partie de la périphérie de la couronne d'orientation, et en ce que les corps de frottement (12, 13) sont disposés concentriquement par rapport à la couronne d'orientation et sont juxtaposés à celle-ci.

3. Dispositif selon la revendication 1 ou 2, caractérisé en ce que les corps de frottement (12, 13) sont formés par une plaque de frottement (13), d'une part, et par au moins une garniture de frottement (12), d'autre part.

4. Dispositif selon la revendication 3, caractérisé en ce que la plaque de frottement (13) est assemblée de manière fixe avec l'une des parties de wagon (2), alors que la garniture de frottement (12) est assemblée avec l'autre partie de wagon (1).

5. Dispositif selon la revendication 3 ou 4, caractérisé en ce que la garniture de frottement est divisée en plusieurs garnitures de frottement séparées, qui sont guidées et maintenues dans des supports pour garniture de frottement (14).

6. Dispositif selon l'une quelconque des revendications 3 à 5, caractérisé en ce que le ressort de pression (8), au moins au nombre de un, accroît la force de contact entre la plaque de frottement (13), d'une part, et la garniture de frottement (12), d'autre part.

7. Dispositif selon l'une quelconque des revendications 3 à 6, caractérisé en ce que le ressort de pression (8), au moins au nombre de un, pousse la garniture de frottement (12) contre la plaque de frottement (13) et augmente, de ce fait, l'action de blocage du pivotement visée.

8. Dispositif selon l'une quelconque des revendications 3 à 7, caractérisé en ce que des "poches pour ressorts (7)" sont montées sur la partie de wagon (1) correspondante, dans le sens radial par rapport au point de rotation (5), dans lesquelles s'engagent les ressorts de pression (8) et sollicitent dans le sens vertical un support de la garniture de frottement (12), désigné comme plaque d'appui (10).

9. Dispositif selon la revendication 8, caractérisé en ce que la plaque d'appui (10) sert à transmettre, si possible uniformément, la force de pression, due à la précontrainte appliquée par les ressorts (8), sur les surfaces de contact entre la garniture de frottement (12) et la plaque de frottement (13) sur l'autre partie de wagon (2).

10. Dispositif selon l'une quelconque des revendications 3 à 9, caractérisé en ce que pour compenser une diminution de l'épaisseur des garnitures de frottement (12), due à l'usure, et de ce fait une diminution de la force de pression, il est prévu des rondelles d'ajustage (15), qui seront insérées pour établir un équilibre entre les ressorts de pression (8) et les éléments de serrage (9), de préférence des boulons filetés, utilisés pour la précontrainte des ressorts de pression (8).

11. Dispositif selon l'une quelconque des revendications 8 à 10, caractérisé en ce qu'une plaque métallique segmentée (11) est insérée entre la plaque d'appui (10) et le support de garniture de frottement (14).

12. Dispositif selon la revendication 11, caractérisé en ce que la plaque métallique segmentée (11) est destinée à s'adapter de manière élastique à la diminution d'épaisseur de la garniture de frottement (12) due à l'usure, et en ce que, de cette manière, la force de pression est appliquée de façon optimale sur la garniture de frottement (12).

13. Dispositif selon l'une quelconque des revendications précédentes, caractérisé en ce que le dispositif (4) destiné à réprimer le mouvement de pivotement réalise un assemblage par frottement des parties de wagon (1, 2), indépendante de l'usure due au frottement, qui empêche le mouvement de lacet de chaque partie de wagon (1, 2) et entraîne une stabilisation de l'ensemble du mouvement du véhicule.

14. Dispositif selon l'une quelconque des revendications 3 à 13, caractérisé en ce que le couple de frottement produit par le dispositif (4) destiné à réprimer le mouvement de pivotement est fonction du coefficient de frottement de l'appariement des matériaux utilisés, ainsi que de la force de pression agissant entre la garniture de frottement (12), d'une part, et la plaque de frottement (13), d'autre part.

15. Dispositif selon l'une quelconque des revendications précédentes, caractérisé en ce que, uniquement sur les voies en courbe, la valeur du mouvement relatif des parties de wagon (1, 2) assemblées entre elles est supérieure à l'action de blocage du pivotement.
